# DEMANDE DE BREVET EUROPEEN

(11) **EP 3 395 531 A1**
(43) Date de publication de la demande: **31.10.2018**
(21) Numéro de dépôt: 18169990.1
(22) Date de dépôt: 27.04.2018
(51) Int. Cl.: B29C 44/34, B29C 44/14, B60N 2/58, B29L 31/00, B29L 31/58

(54) **PROCÉDÉ DE RÉALISATION D'UNE MATELASSURE DE SIÈGE DE VÉHICULE AUTOMOBILE**

(30) Priorité: 28.04.2017 FR 1753777
(71) Demandeur: TESCA France, 75008 Paris (FR)
(72) Inventeur: GEORGES, Laurent, 08190 ROIZY (FR)
(74) Mandataire: Sayettat, Julien Christian

(57) **Abrégé**

L'invention concerne un procédé comprenant les étapes suivantes : prévoir une coiffe (2) comprenant une couture (7) définissant un talon de couture (8) saillant de la face d'envers (9) ; mettre en place ladite coiffe dans un moule (10) et réaliser un bloc de rembourrage (13) surmoulant par ladite face d'envers au moins une première part (14) de ladite coiffe comprenant ledit talon ; ledit procédé comprenant une étape supplémentaire de disposition sur l'ensemble de ladite face d'envers correspondant à ladite première part d'un film (15) agencé pour se dégrader et permettre un surmoulage sensiblement sans pénétration de ladite mousse dans l'épaisseur de ladite coiffe, de sorte que ledit film s'étende de part et d'autre dudit talon, de manière à former une barrière à la pénétration de ladite mousse à travers les trous de ladite couture et à permettre à ladite mousse de surmouler ledit talon de part et d'autre sensiblement sans pénétration de mousse dans son épaisseur.

## Description

L'invention concerne un procédé de réalisation d'une matelassure de siège de véhicule automobile, une matelassure réalisée par un tel procédé et un siège de véhicule automobile pourvu d'une telle matelassure.

Il est connu de mettre en oeuvre un procédé de réalisation d'une matelassure de siège de véhicule automobile, ledit procédé comprenant les étapes suivantes :
- prévoir une coiffe de revêtement, ladite coiffe comprenant un premier et un deuxième format de revêtement, lesdits formats étant associés entre eux selon deux bords respectifs de liaison par une couture définissant un talon de couture saillant de la face d'envers de ladite coiffe,
- mettre en place au moins une première part de ladite coiffe dans un moule définissant une cavité de moulage, ledit talon étant compris dans ladite première part, ladite face d'envers étant tournée vers ladite cavité,
- injecter dans ladite cavité un mélange précurseur de mousse élastiquement compressible, de manière à réaliser un bloc de rembourrage surmoulant par ladite face d'envers ladite première part,
- après expansion de ladite mousse, démouler ladite matelassure obtenue.

On précise ici que le talon d'une couture est constitué par les deux bordures résiduelles s'étendant entre ladite couture et les bords des formats qui s'étendent à sa proximité immédiate.

Afin d'éviter un passage de la mousse en expansion à travers les trous de couture, il est connu de revêtir le talon de ladite couture d'une bande d'étanchéité, notamment sous forme de film plastique, ladite bande étant fixée lors de la confection de la coiffe, par exemple par collage.

Avec un tel procédé, on réalise une matelassure dont la coiffe est solidaire, au moins en partie, du bloc de rembourrage qui la surmoule, ce qui évite d'avoir à utiliser des moyens de rappel tels qu'utilisés traditionnellement dans le cas de coiffes montées par chaussage sur un bloc.

Cependant, la mise en place d'une bande d'étanchéité est une opération qui complexifie la réalisation de la coiffe.

En particulier, la coiffe peut être pourvue d'une pluralité de coutures, qui nécessitent autant de bandes d'étanchéité, ce qui rend d'autant plus complexe cette réalisation, et ceci notamment lorsque deux couture se croisent.

L'invention a pour but de pallier cet inconvénient.

A cet effet, et selon un premier aspect, l'invention propose un procédé de réalisation d'une matelassure de siège de véhicule automobile, ledit procédé comprenant les étapes suivantes :
- prévoir une coiffe de revêtement, ladite coiffe comprenant un premier et un deuxième format de revêtement, lesdits formats étant associés entre eux selon deux bords respectifs de liaison par une couture définissant un talon de couture saillant de la face d'envers de ladite coiffe,
- mettre en place au moins une première part de ladite coiffe dans un moule définissant une cavité de moulage, ledit talon étant compris dans ladite première part, ladite face d'envers étant tournée vers ladite cavité,
- injecter dans ladite cavité un mélange précurseur de mousse élastiquement compressible, de manière à réaliser un bloc de rembourrage surmoulant par ladite face d'envers ladite première part,
- après expansion de ladite mousse, démouler ladite matelassure obtenue.
ledit procédé comprenant une étape supplémentaire de disposition sur l'ensemble de ladite face d'envers correspondant à ladite première part, avant injection dudit mélange, d'un film agencé pour se dégrader sous l'action de la chaleur et de la pression produites par l'expansion de ladite mousse et pour permettre un surmoulage sensiblement sans pénétration de ladite mousse dans l'épaisseur de ladite coiffe, de sorte que ledit film soit disposé de manière à s'étendre de part et d'autre dudit talon, de manière à former une barrière à la pénétration de ladite mousse à travers les trous de ladite couture et à permettre à ladite mousse de surmouler ledit talon de part et d'autre sensiblement sans pénétration de mousse dans son épaisseur.

On précise ici que le fait de surmouler ledit talon de part et d'autre signifie que ledit talon est enrobé dans la mousse par toutes ses faces.

Avec un tel procédé, le film étant disposé de manière à s'étendre de part et d'autre du talon, on n'a plus à revêtir ledit talon d'une bande d'étanchéité lors de la confection de la coiffe, l'étanchéité étant réalisée par ledit film dont la mise en place est particulièrement simple.

En outre, comme précisé ci-dessus, la présence d'un tel film empêche sensiblement la pénétration de mousse dans l'épaisseur de la coiffe, ce qui permet d'éviter un effet de « cartonnage » nuisible au confort du siège.

Cependant, on sait que le fait d'interposer un film étanche entre une coiffe et un bloc de rembourrage entraine un inconfort hygrothermique pour l'occupant du siège, puisque la circulation d'air et d'humidité est empêchée par ledit film.

C'est pourquoi l'invention prévoit l'utilisation d'un film agencé pour se dégrader - notamment par fusion ou création de micro-perforations - sous l'action de la chaleur et de la pression produites par l'expansion de ladite mousse, et aussi pour permettre un surmoulage sensiblement sans pénétration de ladite mousse dans l'épaisseur de la coiffe.

L'utilisation d'un tel film permet en outre à la mousse de surmouler le talon de couture de part et d'autre sensiblement sans pénétration de mousse dans son épaisseur, ce qui permet d'éviter la formation de lignes dures au niveau des coutures, par effet de « cartonnage ».

Selon d'autres aspects, l'invention propose une matelassure réalisée par un tel procédé et un siège de véhicule automobile comprenant une telle matelassure.

D'autres particularités et avantages de l'invention apparaîtront dans la description qui suit, faite en référence aux figures jointes, dans lesquelles :
- la figure 1 est une vue schématique en coupe partielle d'une matelassure selon une réalisation en cours de fabrication, le mélange précurseur de mousse venant d'être injecté dans la cavité de moulage,
- la figure 2 est une vue schématique en coupe partielle de la matelassure de la figure 1 une fois réalisée, en vue de détail sur la zone de couture,
- la figure 3 est analogue à la figure 2, en vue de détail sur la zone de couture, selon une variante de réalisation,
- la figure 4 est analogue à la figure 2, en vue de détail sur la zone de couture, selon une autre variante de réalisation.

En référence aux figures, on décrit un procédé de réalisation d'une matelassure 1 de siège de véhicule automobile, ledit procédé comprenant les étapes suivantes :
- prévoir une coiffe 2 de revêtement, ladite coiffe comprenant un premier 3 et un deuxième 4 format de revêtement, lesdits formats étant associés entre eux selon deux bords respectifs de liaison 5a,5b par une couture 7 définissant un talon de couture 8 saillant de la face d'envers 9 de ladite coiffe,
- mettre en place au moins une première part 14 de ladite coiffe dans un moule 10 définissant une cavité de moulage 11, ledit talon étant compris dans ladite première part, ladite face d'envers étant tournée vers ladite cavité,
- injecter dans ladite cavité un mélange précurseur de mousse 12 élastiquement compressible, de manière à réaliser un bloc de rembourrage 13 surmoulant par ladite face d'envers ladite première part,
- après expansion de ladite mousse, démouler ladite matelassure obtenue,
ledit procédé comprenant une étape supplémentaire de disposition sur l'ensemble de ladite face d'envers correspondant à ladite première part, avant injection dudit mélange, d'un film 15 agencé pour se dégrader sous l'action de la chaleur et de la pression produites par l'expansion de ladite mousse et pour permettre un surmoulage sensiblement sans pénétration de ladite mousse dans l'épaisseur de ladite coiffe, de sorte que ledit film soit disposé de manière à s'étendre de part et d'autre dudit talon, de manière à former une barrière à la pénétration de ladite mousse à travers les trous de ladite couture et à permettre à ladite mousse de surmouler ledit talon de part et d'autre sensiblement sans pénétration de mousse dans son épaisseur.

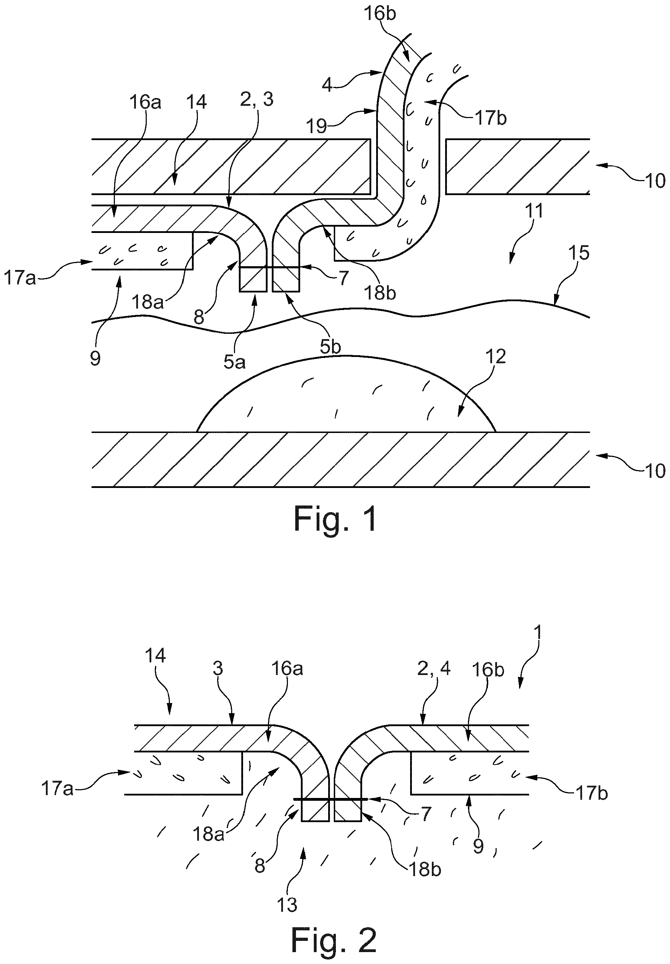

Selon toutes les réalisations représentées comme montré en figure 1, le procédé peut prévoir, lors de la mise en place de la coiffe 2 dans le moule 10, de disposer une deuxième part 19 de ladite coiffe hors dudit moule, de sorte que ladite deuxième part soit non surmoulée par le bloc 13, ladite deuxième part pouvant notamment comprendre, comme on le reverra plus loin, les deux parties latérales de ladite coiffe.

On décrit à présent une matelassure 1 de siège de véhicule automobile réalisée par un tel procédé, ladite matelassure comprenant :
- une coiffe 2 comprenant un premier 3 et un deuxième 4 format de revêtement, lesdits formats étant associés entre eux selon deux bords respectifs de liaison 5a,5b par une couture 7 définissant un talon de couture 8 saillant de la face d'envers 9 de ladite coiffe,
- un bloc 13 de rembourrage en mousse élastiquement compressible, ledit bloc surmoulant par ladite face d'envers au moins une première part 14 de ladite coiffe comprenant ledit talon en laissant ladite coiffe sensiblement exempte de mousse dans son épaisseur, ladite mousse surmoulant ledit talon de part et d'autre sensiblement sans pénétration de mousse dans son épaisseur.

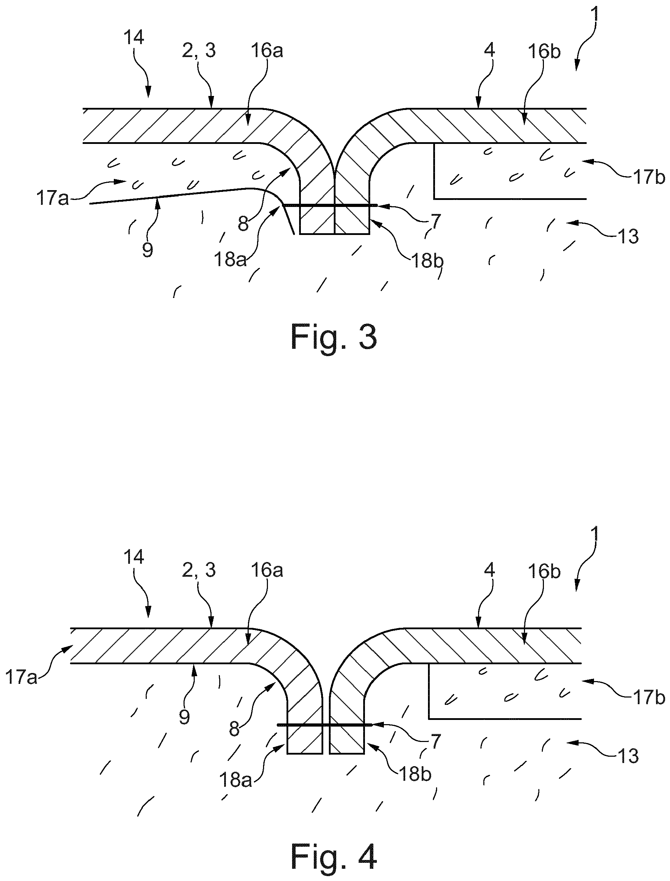

Selon les réalisations représentées en figures 2 et 3, au moins le premier format 3 comprend une couche de revêtement 16a - par exemple à base de tissu, de cuir ou encore de textile enduit de matériau plastique - et une couche d'envers 17a à base de mousse - par exemple de polyuréthanne - élastiquement compressible.

Selon la réalisation représentée en figure 2, la couche d'envers 17a du premier format 3 s'étend jusqu'à proximité du bord de liaison 5a correspondant, de manière à ménager une bordure 18a dudit premier format dépourvue de couche d'envers 17a.

Selon la variante de réalisation représentée en figure 3, la couche d'envers 17a du premier format 3 est arasée - par exemple par fraisage - à proximité du bord de liaison 5a correspondant, de manière à ménager une bordure 18a dudit premier format pourvu d'une couche d'envers 17a amincie.

Selon la réalisation représentée, l'arasage est réalisé de façon progressive.

Selon la variante de réalisation représentée en figure 4, au moins le premier format 3 comprend une couche de revêtement 16a dépourvue de couche d'envers à base de mousse élastiquement compressible.

Dans toutes ces réalisations, l'épaisseur de la coiffe 2 est réduite au niveau de la couture 7, ce qui permet de faciliter la réalisation de ladite couture et aussi de pouvoir disposer d'une conformation géométrique très affinée au niveau de ladite couture, ladite conformation pouvant notamment présenter des cassures de volume nettes en lieu et place des formes arrondies obtenues en cas d'épaisseurs de formats 3,4 importantes au niveau de ladite couture, ce qui offre aux stylistes une large plage d'expression pour conférer aux matelassures 1 des aspects très diversifiés.

Concernant le deuxième format 4, on a représenté dans toutes les réalisations le fait qu'il comprend une couche de revêtement 16b - par exemple à base de tissu, de cuir ou encore de textile enduit de matériau plastique - et une couche d'envers 17b à base de mousse - par exemple de polyuréthanne - élastiquement compressible.

Sa couche d'envers 17b s'étend, selon les réalisations représentées, jusqu'à proximité du bord de liaison 5b correspondant, de manière à ménager une bordure 18b du deuxième format dépourvue de couche d'envers 17b.

Bien entendu, on peut envisager de donner au deuxième format 4 l'une ou l'autre des autres configurations envisagées ci-dessus pour le premier format 3, sachant que ledit premier format peut présenter une configuration autre que celle dudit premier format.

Par exemple, de façon non représentée, on peut prévoir que la couche d'envers 17a du premier format 3 s'étende jusqu'à proximité du bord de liaison 5a correspondant, de manière à ménager une bordure 18a dudit premier format dépourvue de couche d'envers 17a, et que la couche d'envers 17b du deuxième format 4 soit arasée à proximité du bord de liaison 5b correspondant, de manière à ménager une bordure 18b dudit deuxième format pourvu d'une couche d'envers 17b amincie.

Selon toutes les réalisations, comme on l'a représenté uniquement en figure 2, une deuxième part 19 de la coiffe 2 peut être non surmoulée par le bloc 13.

En particulier, la deuxième part 19 de coiffe 2 non surmoulée peut comprendre ses deux parties latérales.

Un tel agencement permet d'obtenir une meilleure résistance du bloc 13 en regard des flexions qu'il subit au niveau des parties latérales lors des entrées/sorties des passagers dans le/hors du véhicule, puisque les efforts transmis à la coiffe 2 sont répercutés audit bloc de façon moindre que lorsque ladite coiffe est intégralement surmoulée par ledit bloc.

On décrit à présent les caractéristiques d'un film 15 donnant des résultats particulièrement intéressants :
- ledit film est à base de polyuréthane,
- son point de fusion est compris entre 40 et 60°C,
- son indice de fluidité en masse, mesuré selon la norme NF T 51-016 à 190°C avec un rhéomètre capillaire à écoulement forcé dont le piston est chargé avec une masse de 2,160 kg, est supérieur à 15 g/10 min,
de sorte que ledit film se dégrade sous l'action de la chaleur dégagée lors de la formation de la mousse du bloc 13, afin de permettre un surmoulage de coiffe 2 par ledit bloc sensiblement sans pénétration de la mousse dudit bloc dans l'épaisseur de ladite coiffe.

On peut éventuellement prévoir de chauffer le moule, par exemple à une température de l'ordre de 45 à 55°C, pour aider à la dégradation du film 15.

Selon une réalisation, l'indice de fluidité en masse du film 15, mesuré selon la norme NF T 51-016 à 190°C avec un rhéomètre capillaire à écoulement forcé dont le piston est chargé avec une masse de 2,160 kg, est inférieur à 50 g/10 min.

Selon une réalisation, l'indice de fluidité en masse du film 15, mesuré selon la norme NF T 51-016 à 190°C avec un rhéomètre capillaire à écoulement forcé dont le piston est chargé avec une masse de 2,160 kg, est égal à 25±3 g/10 min.

Selon une réalisation, le film 15 présente une épaisseur de 15±3 microns, et notamment une épaisseur de 15±1 microns.

Selon une réalisation, la densité du film 15 est de 1,14±0,05.

Selon une réalisation, le film 15 présente en analyse calorimétrie différentielle à balayage (DSC), réalisée selon la norme ISO 11357, un pic de fusion situé à 49±2°C.

Selon une réalisation, le polyol utilisé pour réaliser le film 15 est à base de polyester.

Selon une réalisation, l'isocyanate utilisé pour réaliser le film 15 comprend un groupe aromatique.

Le choix d'un tel film 15 résulte d'une sélection fine faisant suite à de très nombreux essais réalisés par la demanderesse.

Cette dernière a observé que les paramètres essentiels étaient d'une part la température de fusion et d'autre part la fluidité du film 15 à l'état fondu.

Concernant le paramètre de fluidité, la demanderesse a notamment observé qu'un film 15 présentant à l'état fondu une fluidité insuffisante ne pouvait se dégrader de manière à perdre son étanchéité.

Il en résulte que la matelassure 1 ne peut, dans ces conditions, être pourvue des caractéristiques de confort hygrothermique attendues.

En utilisant un film 15 tel que préconisé, on arrive parfaitement à maîtriser la non pénétration de la mousse du bloc 13 dans une couche d'envers 17a,17b, ledit film se dégradant une fois que la mousse en formation a pris une consistance l'empêchant de pénétrer dans ladite couche.

Par ailleurs, la demanderesse a observé que l'utilisation d'un tel film 15 permet de réaliser une association très robuste entre la coiffe 2 et le bloc 13, et ceci malgré la non pénétration de la mousse dudit bloc dans l'épaisseur de ladite coiffe.

Selon une réalisation, une couche d'envers 17a,17b présente une densité de 0,028±0,002, ce qui correspond usuellement à une qualité médiocre de mousse utilisée pour des coiffes associées à un bloc de rembourrage par chaussage et non par surmoulage de ladite coiffe par ledit bloc.

L'emploi d'une telle couche d'envers 17a,17b, de faible coût, permet de réaliser une matelassure 1 de coût minimisé.

Selon une réalisation, une couche d'envers 17a,17b présente une épaisseur comprise entre 1,5 et 2 mm.

Dans toutes les réalisations, une couche d'envers 17a,17b peut être pourvue, sur sa face externe, d'un voile de protection non représenté, notamment en maille rectiligne ou circulaire.

Selon une réalisation, la mousse du bloc 13 peut présenter une densité accrue en parties latérales de la matelassure 1, de manière à permettre un maintien latéral ferme du passager.

On décrit enfin un siège de véhicule automobile non représenté, ledit siège comprenant une matelassure 1, ladite matelassure présentant une première part 14 de coiffe 2 surmoulée et une deuxième part 19 non surmoulée, ladite deuxième part non surmoulée comprenant les deux parties latérales de ladite coiffe, ladite matelassure étant associée par lesdites parties latérales à une armature dudit siège.

Les parties latérales peuvent être ainsi mises en tension de manière à se plaquer contre le bloc de rembourrage 13.

Pour réaliser cette association des parties latérales, on utilise notamment des profilés fixés, par exemple par couture, en périphérie desdites parties, lesdits profilés s'emboitant dans des parties d'ancrage prévues sur l'armature du siège.

## Revendications

1. Procédé de réalisation d'une matelassure (1) de siège de véhicule automobile, ledit procédé comprenant les étapes suivantes :
• prévoir une coiffe (2) de revêtement, ladite coiffe comprenant un premier (3) et un deuxième (4) format de revêtement, lesdits formats étant associés entre eux selon deux bords respectifs de liaison (5a,5b) par une couture (7) définissant un talon de couture (8) saillant de la face d'envers (9) de ladite coiffe,
• mettre en place au moins une première part (14) de ladite coiffe dans un moule (10) définissant une cavité de moulage (11), ledit talon étant compris dans ladite première part, ladite face d'envers étant tournée vers ladite cavité,
• injecter dans ladite cavité un mélange précurseur de mousse (12) élastiquement compressible, de manière à réaliser un bloc de rembourrage (13) surmoulant par ladite face d'envers ladite première part,
• après expansion de ladite mousse, démouler ladite matelassure obtenue,
ledit procédé étant **caractérisé en ce qu'**il comprend une étape supplémentaire de disposition sur l'ensemble de ladite face d'envers correspondant à ladite première part, avant injection dudit mélange, d'un film (15) agencé pour se dégrader sous l'action de la chaleur et de la pression produites par l'expansion de ladite mousse et pour permettre un surmoulage sensiblement sans pénétration de ladite mousse dans l'épaisseur de ladite coiffe, de sorte que ledit film soit disposé de manière à s'étendre de part et d'autre dudit talon, de manière à former une barrière à la pénétration de ladite mousse à travers les trous de ladite couture et à permettre à ladite mousse de surmouler ledit talon de part et d'autre sensiblement sans pénétration de mousse dans son épaisseur.

2. Procédé selon la revendication 1, **caractérisé en ce qu'**il prévoit, lors de la mise en place de la coiffe (2) dans le moule (10), de disposer une deuxième part (19) de ladite coiffe hors dudit moule, de sorte que ladite deuxième part soit non surmoulée par le bloc (13).

3. Matelassure (1) de siège de véhicule automobile réalisée par un procédé selon l'une des revendications 1 ou 2, ladite matelassure comprenant :
• une coiffe (2) comprenant un premier (3) et un deuxième (4) format de revêtement, lesdits formats étant associés entre eux selon deux bords respectifs de liaison (5a,5b) par une couture (7) définissant un talon de couture (8) saillant de la face d'envers (9) de ladite coiffe,
• un bloc de rembourrage (13) en mousse élastiquement compressible, ledit bloc surmoulant par ladite face d'envers au moins une première part (14) de ladite coiffe comprenant ledit talon en laissant ladite coiffe sensiblement exempte de mousse dans son épaisseur, ladite mousse surmoulant ledit talon de part et d'autre sensiblement sans pénétration de mousse dans son épaisseur.

4. Matelassure selon la revendication 3, **caractérisée en ce qu'**au moins le premier format (3) comprend une couche de revêtement (16a) et une couche d'envers (17a) à base de mousse élastiquement compressible.

5. Matelassure selon la revendication 4, **caractérisée en ce que** la couche d'envers (17a) du premier format (3) s'étend jusqu'à proximité du bord de liaison (5a) correspondant, de manière à ménager une bordure (18a) dudit premier format dépourvue de couche d'envers (17a).

6. Matelassure selon la revendication 4, **caractérisée en ce que** la couche d'envers (17a) du premier format (3) est arasée à proximité du bord de liaison (5a) correspondant, de manière à ménager une bordure (18a) dudit premier format pourvu d'une couche d'envers (17a) amincie.

7. Matelassure selon la revendication 3, **caractérisée en ce qu'**au moins le premier format (3) comprend une couche de revêtement (16a) dépourvue de couche d'envers (17a) à base de mousse élastiquement compressible.

8. Matelassure selon l'une quelconque des revendications 3 à 7, quand elle se rattache à la revendication 2, **caractérisée en ce qu'**une deuxième part (19) de la coiffe (2) est non surmoulée par le bloc (13).

9. Matelassure selon la revendication 8, **caractérisée en ce que** la deuxième part (19) de coiffe (2) non surmoulée comprend ses deux parties latérales.

10. Siège de véhicule automobile comprenant une matelassure (1) selon l'une quelconque des revendications 8 ou 9, ladite matelassure présentant une première part (14) de coiffe (2) surmoulée et une deuxième part (19) non surmoulée, ladite deuxième part non surmoulée comprenant les deux parties latérales de ladite coiffe, ladite matelassure étant associée par lesdites parties latérales à une armature dudit siège.
